# EUROPEAN PATENT SPECIFICATION

(11) **EP 2 733 453 B1**
(45) Date of publication and mention of the grant of the patent: **14.09.2016**
(21) Application number: 12811447.7
(22) Date of filing: 12.07.2012
(51) Int. Cl.: F28G 3/10, B08B 9/027, B08B 9/045, A23L 2/00

(54) **IMPROVED HEAT-EXCHANGING DEVICE FOR TREATING LIQUIDS AND OTHERS**
VERBESSERTE WÄRMETAUSCHERVORRICHTUNG ZUR BEHANDLUNG VON FLÜSSIGKEITEN UND ANDEREN STOFFEN
DISPOSITIF D'ÉCHANGE THERMIQUE AMÉLIORÉ POUR LE TRAITEMENT DE LIQUIDES ET AUTRES

(30) Priority: 14.07.2011 ES 201100807 P
(43) Date of publication of application: 21.05.2014
(73) Proprietor: Moreno García, Antonio, 30500 Molina des Segura (Murcia) (ES)
(72) Inventor: Moreno García, Antonio, 30500 Molina des Segura (Murcia) (ES)
(74) Representative: Pardo Zapata, José
(86) International application number: PCT/ES2012/000199
(87) International publication number: WO 2013/007842

(56) References cited:
- CN-A- 101 769 697
- CN-A- 101 968 332
- CN-U- 201 589 575
- GB-A- 1 123 741
- US-A- 4 371 032
- US-A- 4 937 907
- US-A1- 2011 056 653

## Description

### Object of the Invention

This invention refers to an improved heat exchanging device for treating liquids and others, and has been developed in the field of technology of conventional heat exchangers used for treatment of juices, pulps and other food products, and also for treating fluids and leachates whose removal or treatment is required by the increasingly strict environmental laws.

The object of this invention is directed at the improvement of the different conventional heat exchangers through the creation of a novel process of self-cleaning which permits, in turn, a variety of applications, in particular and inter alia in the field of particulate food preparations, because of the non-aggressive nature of its internal transport.

CN101769697 A and CN201589575U disclose heat exchangers according to the preamble of claim 1.

### Background to the invention

In the field of technology of conventional heat exchangers for the treatment of juices, pulps and other food products, these consist basically of a bundle of tubes, or of overlapping tubes, through which the product to be heated or cooled flows, housed inside a chamber with its corresponding inlet and outlet through which the heat transfer fluid circulates.

In the current state of the art, there are a number of applications of this technology for those cases in which the product to be treated generates sediment deposited in the tubes, such as, for example, when crude oil, crude oil derivatives and chemical products in its composition are processed. As reference to background history, the existence of the following previous documents may be cited: US- 2943845, US-304470 and US-4174750, published on 05/07/1960, 02/09/1884 and 20/11/1979, respectively.

In the case of treatment of juices and pulps in conventional exchangers, reference must be made to patent ES-2158742, which was published on 01.09.2001.

In the current state of the art relating to conventional heat exchangers, the problem of heat treatment of particulate products intended for human consumption in which it is necessary to keep their shape and structure remains unresolved; this is the case, in particular, when they are subjected to a frying process so that, in addition to maintaining their structure, there is a cleaning process of the tubes to prevent the generation of sheets of burnt product which deteriorate the quality of the end product. A further problem that remains unresolved is that associated with the treatment of a variety of industrial wastes applied to animal feed, such as the drying of orange pulp and peel.

### Summary of the Invention

The improvements contributed by the devices in this invention as defined in claim 1 allow a satisfactory solution, using a novel process, to the problems inherent in keeping the inside of the tubes clean, and at the same time allow, using a novel procedure, soft transport of the particulate products for human consumption and progress without jams during the drying of the orange pulp and peel, amongst others, generating, in any case, the necessary turbulences for the technical improvement of the process.

Starting from the conventional technology for a heat exchanger referred to in the background, the improvements of the invention consist of establishing inside each tube through which the product circulates a spindle housed coaxially in said tube, in which metal bars are incorporated, which house two scraper elements which are pushed towards the walls by the action of strategically situated springs designed to achieve a sufficient and uniform pressure of the scrapers on the inside of the tube.

Another improvement of the invention, related to the heat processing of liquids and products which do not require the structural integrity thereof to be maintained, consists of the metal bars in which the scraper elements are incorporated being supported by circular parts located at an appropriate distance, determined according to the length of the tubes, which are installed on the shaft located in the centre of each tube; in the same way as the previous case, this ensures that the inside of the tube is kept permanently clean.

In either case, the presence of the aforementioned metal bars causes the appearance of certain internal turbulence which substantially improves the thermal behaviour of the process.

### Brief Description of the Drawings

To complement the description, for a better understanding of the features of the invention, a set of drawings are included as an integral part thereof. They are provided for illustrative purposes and are not limited in any way, and will serve as clarification of a preferred embodiment of the invention. In these drawings:
Figure 1 shows a schematic representation of a conventional heat exchanger in side elevation, for the treatment of products such as creams, leachates, etc.;
Figure 2 shows a perspective view of a section of the shaft installed in the tube, incorporating the circular parts in which the metal bars which support the scraper elements are housed, together with a larger scale detail;
Figure 3 shows a side elevation view of a spindle on which the metal support and the scraper elements are housed;
Figure 4 shows a schematic view, in perspective, of the spindle, in which the detail of the metal supports and scraper elements incorporated therein can be seen, together with the end gear used to move the spindle, and
Figure 5 shows an axial view of a spindle housed in its corresponding tube, in which the detail of the incorporation of the metal support in the spindle and the housing of the scraper element therein can be seen. Also visible are the springs which push the scraper element against the inside of the tube to ensure that it is permanently scraped.

### Description of a Preferred Embodiment of the Invention

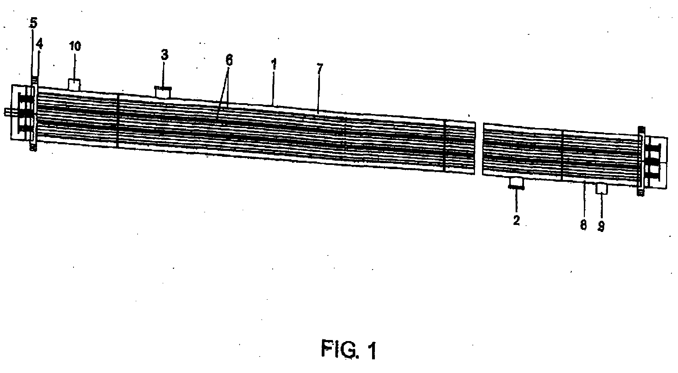

Figure 1 shows a conventional heat exchanger incorporating a tubular casing (1) near the ends of which there is an inlet (2) and an outlet (3) for passage of the heat transfer fluid which generates the heating or cooling effect, and for which the tubular casing is closed at the ends by end plates (4) which are clamped against annular plates (5) appropriately attached to the casing itself, with a gasket or other means placed in between to ensure a water-tight seal. Inside the inner chamber to the casing, a variable number of tubes (6) are housed, to convey the product to be treated, preferably distributed uniformly and isolated from the chamber through which the heat transfer fluid flows, but in open communication, at the ends, with a product inlet chamber (7) and an outlet chamber (8). These two chambers (7, 8) have respective entrance and exit (10) and (9), arranged in opposition, so that the product to be treated enters through the entrance (9) into the chamber (8), runs through the spaces between the tubes (6), where the heat exchange takes place, and finally leaves via the exit (10) of the chamber (7).

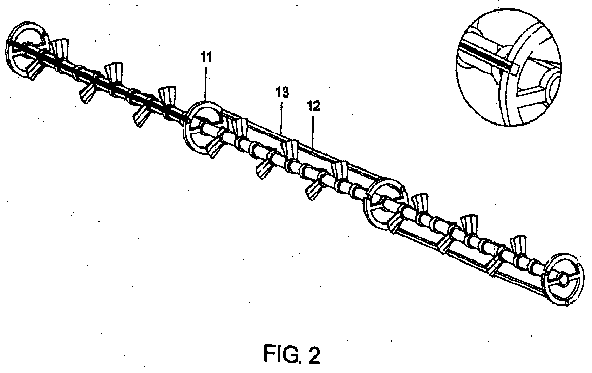

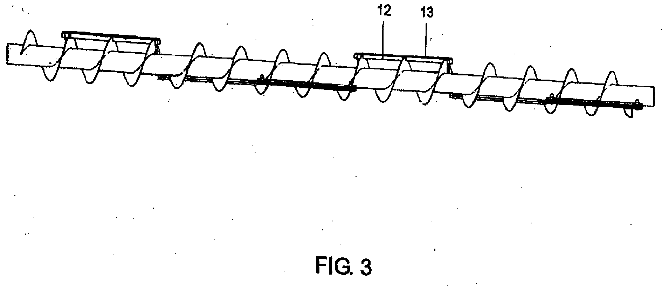

Starting from this basic, conventional structure, the improvements of the invention, in the world of heat exchangers and using a new procedure, are described and displayed below:
A. For the treatment of liquid products and other similar products which are propelled forward by the action of blades and the driving force of a pump, incorporated in each tube (6), at an appropriate distance according to the length of the tubes, are circular parts (11) which are attached to an internal shaft, which houses metal bars (12) which provide support for respective scrapers (13) which are pushed towards the inner walls of the tube by the action of strategically placed springs which allow, by the new process of the invention, the full and permanent cleaning of the inside of the tubes. This situation can be seen in Figure 2 of the drawings, which shows a schematic view in perspective of a shaft like the ones incorporated inside the tubes, equipped with the circular parts (11) between which the aforementioned metal bars (12) which support said scraper elements (13) extend lengthways.
B. If the treatment is applied to particulate products which require soft transfer so that their integrity can be guaranteed, each of the tubes (6) referred to for the treatment of the product contains a spindle inside, which incorporates metal bars supporting two scraper elements which are pushed towards the walls of the tube, also by the action of strategically situated springs which allow, by means of this same novel process, the full and permanent cleaning of the inside of the tubes. The situation can be seen in the representation in Figure 3, which shows a perspective view of a portion of the spindle equipped with the metal bars (12) from each of which a scraper element (13) projects, driven by internal springs in said bars (12).

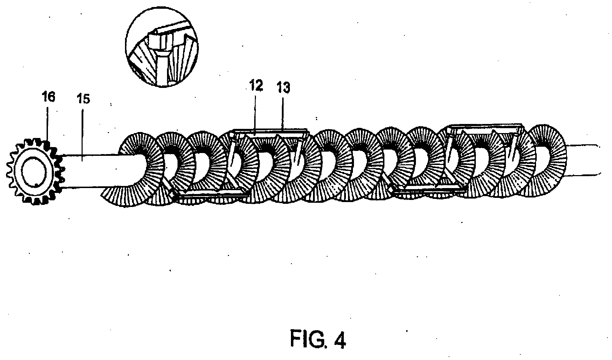

Figure 4 shows a perspective view of the spindle attached to a shaft (15), with a larger detail which shows the incorporation therein of metal bars or supports (12) and the associated scraper elements (13). Said supports are housed in the spindle in discontinuous fashion, i.e. in positions which are successively offset at an angle, which is essential to allow the particulate products to advance. At the end of the shaft (15) can be seen the gear (16), through which it receives the rotary movement.

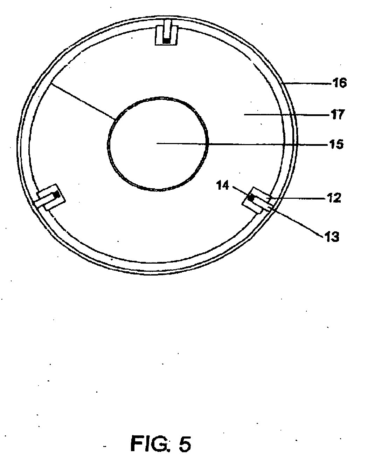

Figure 5, finally, shows an axial view of a spindle with the numerical reference (17) mounted on the shaft (15), inside the tube (16), in which the metal bars (12) which support the scraper elements (13) have been incorporated; these scraper elements rub against the inside of the tube (16) because of the pressure exercised against them by the springs (14) strategically positioned against the base of the scraper bar (12).

It is considered that the above description is sufficient for any expert in heat exchangers and food technology processes to understand it, without the need for a further explanation thereof.

In any case, provided the essence of the invention is not modified, the materials, size and arrangement thereof may be adapted to the needs of each project, given that this is a broad and non-restrictive explanation.

## Claims

1. Improved heat exchanger device for treatment of liquids and other products, formed of a tubular casing (16) inside which a number of tubes (6) are housed, through which the product which is the object of the heat treatment circulates; these tubes are distributed inside the aforementioned casing in a uniform manner, with separations between them which give rise to the formation of spaces for the heat transfer fluid to pass, with each of the tubes (6) having internal means or pushing which consist of pushing blades mounted on a support shaft arranged to drive the movement of the product flowing inside the tubes, **characterised in that** each of said tubes (6) for the treatment of products includes, depending on its length, a variable number of circular parts (11) successively separated from each other by a predetermined distance, mounted and attached to the support shaft for the pushing blades, so that between every two successively adjacent circular parts, metal bars (12) extend lengthways; these metal bars house respective scraper elements (13) which project from said bars (12) towards the outside, pushed by springs (14) located inside the bars, so that they rub against the inside surface of each respective tube (6), keeping said surface perfectly clean.

2. Device according to claim 1, **characterised in that**, in the case of treatment of particulate products, each of the tubes (6) for treatment of the product contain inside a respective spindle (17) which incorporates a variable number of longitudinal metal bars (12) which support respective scraper elements (13), which are pushed against the inner walls of said tubular casing (16) by the action of springs located inside the aforementioned metal bars (12), thus guaranteeing the continuous cleaning of the inner surface of the tubes (6) of product.

3. Device according to claims 1 and 2, **characterised in that** the metal bars (12) which support the respective scraper elements (13) which occupy successively adjacent positions in the lengthways direction, are offset at an angle.

## Patentansprüche

1. Verbesserte Wärmetauschervorrichtung zur Behandlung von Flüssigkeiten und anderen Produkten, gebildet aus einem rohrförmigen Gehäuse (16) innerhalb welches eine Anzahl von Rohren (6) aufgenommen sind, durch die das Produkt, welches das Ziel der Wärmebehandlung ist, zirkuliert; wobei diese Rohre innerhalb des vorerwähnten Gehäuses in einer gleichförmigen Weise verteilt sind, mit Abständen dazwischen, welche zur Bildung von räumlichen Bereichen für den Durchfluss der Wärmeübertragungsflüssigkeit führen, wobei jedes der Rohre (6) innere Drückmittel aufweist, welche aus auf einer Stützwelle gelagerten Schiebeschildern bestehen, dazu angeordnet, die Bewegung des innerhalb der Rohre fließenden Produkts anzuregen, **dadurch gekennzeichnet, dass** jedes der genannte Rohre (6) zur Behandlung von Produkten, in Abhängigkeit von dessen Länge, eine variable Anzahl von kreisförmigen Teilen (11) umfasst, welche voneinander aufeinanderfolgend mit einem vorgegebenen Abstand getrennt sind, auf der Stützwelle für die Schiebeschilder gelagert und mit derselben gekoppelt, sodass sich zwischen jede zwei aufeinanderfolgend benachbarten kreisförmigen Teilen, Metallstangen (12) längs erstrecken; wobei diese Metallstangen jeweilige Schabelemente (13) aufnehmen, welche aus dem genannten Stangen (12) zum Äußeren vorspringen, von innerhalb der Stangen liegenden Federn (14) gedrückt, sodass sie an der inneren Oberfläche jedes jeweiligen Rohrs (6) schleifen und die genannte Oberfläche 2 perfekt rein halten.

2. Vorrichtung nach Anspruch 1, **dadurch gekennzeichnet, dass**, im Falle der Behandlung von partikulären Produkten, wobei jedes der Rohre (6) zur Behandlung vom Produkt im Inneren eine jeweilige Spindel (17) enthalten, welche eine variable Anzahl von Metallstangen (12) einbauen, welche die jeweiligen Schabelemente (13) stützen, welche gegen die inneren Wände des genannten rohrförmigen Gehäuses (16) durch die Wirkung von innerhalb der vorerwähnten Metallstangen (12) liegende Federn gedrückt werden, sodass die kontinuierliche Reinigung der inneren Oberfläche der Rohre (6) des Produkts zu gewährleisten.

3. Vorrichtung nach den Ansprüchen 1 und 2, **dadurch gekennzeichnet, dass** die Metallstangen (12), welche die jeweiligen Schabelemente (13) stützen, welche aufeinanderfolgend benachbarte Stellungen in der longitudinalen Richtung annehmen, mit einem Winkel versetzt sind.

## Revendications

1. Dispositif échangeur de chaleur amélioré pour le traitement de liquides et d'autres produits, formé d'un boîtier (16) tubulaire dans lequel une pluralité de tubes (6) sont logés, à travers lesquels le produit qui fait l'objet du traitement thermique circule ; ces tubes sont répartis à l'intérieur du boîtier mentionné ci-dessus de façon uniforme, avec des séparations entre eux qui donnent lieu à la formation d'espaces pour le passage du fluide caloporteur, chacun des tubes (6) ayant des moyens internes de poussée ce qui consiste en lames de poussée montées sur un arbre de support placé de manière à entraîner le mouvement du produit circulant à l'intérieur des tubes, **caractérisé en ce que** chacun desdits tubes (6) pour le traitement de produits comprend, selon sa longueur, un nombre variable de pièces (11) circulaires successivement séparées les unes des autres par une distance prédéterminée, montées et fixées à l'arbre de support pour les lames de poussée, de sorte qu'entre chaque paire de pièces circulaires adjacentes successives, des barres (12) métalliques s'étendent longitudinalement ; ces barres métalliques logent des éléments (13) de racleur respectifs qui font saillie à partir desdites barres (12) vers l'extérieur, poussés par des ressorts (14) situés à l'intérieur des barres, de sorte qu'ils frottent contre la surface intérieure de chaque tube (6) respectif, gardant ladite surface parfaitement propre.

2. Dispositif selon la revendication 1, **caractérisé en ce que**, dans le cas d'un traitement de produits particulaires, chacun des tubes (6) pour le traitement du produit contient à l'intérieur une broche (17) respective qui comprend un nombre variable de barres (12) métalliques longitudinales qui supportent des éléments (13) de racleur respectifs, qui sont poussés contre les parois internes dudit boîtier (16) circulaire par l'action de ressorts situés à l'intérieur des barres (12) métalliques mentionnées ci-dessus, garantissant ainsi le nettoyage continu de la surface interne des tubes (6) de produit.

3. Dispositif selon les revendications 1 et 2, **caractérisé en ce que** les barres (12) métalliques qui supportent les éléments (13) de racleur respectifs qui occupent des positions adjacentes successives dans la direction longitudinale, sont décalées formant un angle.
